# FASCICULE DE BREVET EUROPEEN

(11) **EP 3 134 455 B1**
(45) Date de publication et mention de la délivrance du brevet: **02.01.2019**
(21) Numéro de dépôt: 15720384.5
(22) Date de dépôt: 14.04.2015
(51) Int. Cl.: C08G 59/42

(54) **COMPOSITION POUR LA FABRICATION DE RÉSINES VITRIMÉRES DE TYPE EPOXY/ANHYRIDE COMPRENANT UN POLYOL**
ZUSAMMENSETZUNG ZUR HERSTELLUNG VON EPOXID-/ANHYDRIDVITRIMERHARZEN MIT EINEM POLYOL
COMPOSITION FOR MANUFACTURING VITRIMER RESINS OF EPOXY/ANHYDRIDE TYPE COMPRISING A POLYOL

(30) Priorité: 24.04.2014 FR 1453678
(43) Date de publication de la demande: 01.03.2017
(73) Titulaire: Arkema France, 92700 Colombes (FR)
(72) Inventeur: DUQUENNE, Christophe, F-75010 Paris (FR); MELAS, Michel, 69250 MONTANAY (FR); BEAUDRAIS, Sylvain, F-60600 Agnetz (FR)
(74) Mandataire: Bonnel, Claudine
(86) Numéro de dépôt international: PCT/FR2015/050998
(87) Numéro de publication internationale: WO 2015/162356

(56) Documents cités:
- EP-A1- 1 826 227
- EP-A2- 0 381 096
- WO-A1-2009/089145
- WO-A1-2010/121392
- CA-C- 1 338 243
- US-A1- 2013 131 216
- US-A1- 2013 184 379

## Description

### DOMAINE DE L'INVENTION

La présente invention se rapporte à une composition renfermant, outre une résine thermodurcissable de type époxy et un durcisseur, au moins un polyol et au moins un catalyseur d'effet vitrimère. Cette composition permet la fabrication de résines vitrimères, c'est-à-dire de résines déformables à l'état thermodurci.

### ARRIERE-PLAN TECHNIQUE

Les résines thermodurcies (ou thermodurs) ont l'avantage de présenter une résistance mécanique, thermique et chimique élevée et pour cette raison peuvent remplacer les métaux dans certaines applications. Elles ont l'avantage d'être plus légères que les métaux. Elles peuvent aussi être employées comme matrices dans des matériaux composites, comme adhésifs, et comme revêtements. Parmi les polymères thermodurs, on peut citer les polyesters insaturés, les phénoplastes, les polyépoxydes, les polyuréthanes, les aminoplastes.

Les résines thermodurcissables classiques doivent être mises en oeuvre, en particulier elles doivent être moulées de façon à obtenir d'emblée la forme adéquate pour l'utilisation finale. En effet, aucune transformation n'est plus possible une fois que la résine est polymérisée, hormis l'usinage qui reste souvent délicat. Les pièces souples ou dures et les composites à base de résines thermodurcissables ne sont ni transformables ni façonnables, ils ne peuvent pas être recyclés ni soudés.

Parallèlement aux résines thermodurcissables, une classe de matériaux polymères, les thermoplastiques, a été mise au point. Les thermoplastiques peuvent être mis en forme à haute température par moulage ou par injection mais ont des propriétés mécaniques et de résistance thermique et chimique moins intéressantes que celles des résines thermodurcies.

En outre, la mise en forme des thermoplastiques ne peut être réalisée que dans des gammes de température très étroites. En effet, lorsqu'ils sont chauffés, les thermoplastiques deviennent des liquides dont la fluidité varie abruptement au voisinage des températures de fusion et de transition vitreuse, ce qui ne permet pas de leur appliquer toute une variété de méthodes de transformation qui existent pour le verre et pour les métaux, par exemple. Les résines thermoplastiques fondues ont cependant des viscosités généralement trop élevées pour se prêter à l'imprégnation de tissus en vue de l'obtention de matériaux composites.

Dans ce contexte, de nouvelles résines ont été conçues dans le but d'allier à la fois les avantages des thermodurs et des thermoplastiques. Ces matériaux présentent à la fois les propriétés mécaniques et de résistance aux solvants des résines thermodurcies et la capacité à être refaçonnés et/ou réparés des matériaux thermoplastiques. Ces matériaux polymères qui sont capables de passer indéfiniment d'un état solide à un liquide viscoélastique, comme le verre, ont été désignés par "vitrimères". Contrairement aux thermoplastiques, la viscosité des vitrimères varie lentement avec la température, ce qui permet de les utiliser pour la fabrication d'objets ayant des formes particulières incompatibles avec un procédé de moulage, sans utiliser de moule ni contrôler précisément la température de mise en forme.

Les propriétés particulières des vitrimères sont liées à la capacité de leur réseau à se réorganiser au-delà d'une certaine température, sans modifier le nombre de liaisons intramoléculaires ni se dépolymériser, sous l'effet de réactions d'échange interne. Ces réactions entraînent une relaxation des contraintes au sein du matériau qui devient malléable, tout en conservant son intégrité et en restant insoluble dans tout solvant. Ces réactions sont rendues possibles par la présence d'un catalyseur. Dans le cas des vitrimères de type époxy-anhydride, comme dans celui des vitrimères de type époxy-acide, obtenus à partir d'une résine thermodurcissable de type époxy et d'un durcisseur de type anhydride ou acide respectivement, il a été suggéré d'utiliser comme catalyseur un sel métallique de zinc, d'étain, de magnésium, de cobalt, de calcium, de titane ou de zirconium, de préférence l'acétylacétonate de zinc (WO 2012/101078 ; WO 2011/151584). Il a en outre été proposé d'utiliser le triazabicyclodécène (TBD) comme catalyseur dans des systèmes à base de résine époxy et durcisseur acide (M. CAPELOT et al., ACS Macro Lett. 2012, 1, 789-792).

Si ces matériaux présentent effectivement des propriétés vitrimères avantageuses, il a été mis en évidence que celles-ci pouvaient être encore améliorées par ajout d'un polyol aux compositions utilisées pour leur préparation, en ce sens que les contraintes développées au sein des matériaux sont relaxées de manière plus complète et plus rapide, à taux de catalyseur constant, sans que leur stabilité thermique ne se trouve affectée. Il a également été observé que dans certaines conditions l'introduction d'un polyol à la formulation vitrimère ne modifiait pas, ou peu, les températures de transition vitreuse : ces résultats étaient inattendus dans la mesure où l'addition d'un polyol dans des formulations thermodurcissables a plutôt généralement un effet plastifiant. Ces matériaux présentent ainsi de meilleures propriétés de déformation, qui sont plus compatibles avec un procédé industriel de thermoformage.

La présence de polyol dans des compositions de résines époxy a déjà été décrite dans l'art antérieur, par exemple dans les documents WO 2009/089145, CA 1 338 243 ou US 2013/184379. Cependant, il ne s'agit pas de compositions vitrimères de type époxy/anhydride au sens de la présente invention, c'est-à-dire de résines thermodurcissables rendues déformables à l'état thermodurci par la présence d'un catalyseur d'effet vitrimère.

Dans le document WO 2010/121392, un polyol, en particulier un diol, est préalablement réagi avec un anhydride cyclique de façon à obtenir un demi-ester utilisable comme durcisseur dans la formulation de résine époxy.

### DEFINITIONS

Par résine « thermodurcissable », on entend un monomère, oligomère, prépolymère, polymère ou toute macromolécule apte à être réticulé chimiquement. On entend plus préférentiellement un monomère, oligomère, prépolymère, polymère ou toute macromolécule apte à être réticulé chimiquement lorsqu'il est mis à réagir avec un durcisseur (encore appelé réticulant) en présence d'une source d'énergie, par exemple de chaleur ou de rayonnement, et éventuellement d'un catalyseur.

Par résine « thermodurcie » ou « à l'état thermodurci », on entend une résine thermodurcissable réticulée chimiquement de sorte que son point de gel soit atteint ou dépassé. Par "point de gel", on entend le degré de réticulation à partir duquel la résine n'est quasiment plus soluble dans les solvants. Toute méthode classiquement utilisée par l'homme du métier pourra être mise en oeuvre pour le vérifier. On pourra par exemple mettre en oeuvre le test décrit dans la demande WO 97/23516 page 20. Une résine est considérée comme thermodurcie au sens de l'invention dès lors que son taux de gel, c'est-à-dire le pourcentage de sa masse résiduelle après mise en solvant relativement à sa masse initiale avant mise en solvant, est égal ou supérieur à 75 %.

Le terme « durcisseur » désigne un agent réticulant apte à réticuler une résine thermodurcissable. Il s'agit ici d'un composé généralement polyfonctionnel, porteur de fonctions de type anhydride et/ou ou acide capables de réagir avec des fonctions réactives portées par la résine.

Par "catalyseur d'effet vitrimère", on entend un catalyseur qui facilite les réactions d'échange interne au sein d'une résine thermodurcie de façon à la rendre déformable.

Ce catalyseur pourra satisfaire en particulier au test décrit dans la publication WO2012/101078, aux pages 14-15.

Par "polyol" on entend, au sens de la présente invention, un composé comportant au moins deux fonctions hydroxyle, en particulier un alcane linéaire, ramifié ou cyclique renfermant au moins deux fonctions hydroxyle.

Lorsqu'il est fait référence à des intervalles, les expressions du type « allant de ... à ... » incluent les bornes de l'intervalle. Les expressions du type « compris entre ... et ... » excluent les bornes de l'intervalle.

### RESUME DE L'INVENTION

L'invention a pour premier objet une composition comprenant :
- une résine thermodurcissable de type époxy et un durcisseur,
- au moins un polyol, et
- au moins un catalyseur d'effet vitrimère ;
caractérisée en ce que le polyol est un composé renfermant au moins deux fonctions hydroxyle choisi parmi : les diols, et en particulier les glycols ; les polyalkylènes glycols ; les triols ; les tétraols ; les alcools polyvinyliques et leurs mélanges ;
et en ce que le catalyseur d'effet vitrimère est choisi parmi :
- les pyridines ;
- les phosphazènes ;
- les composés de type guanidine ;
- les sels ou complexes métalliques organiques ou inorganiques ou les composés organo-métalliques, de métaux choisis parmi les terres rares, les métaux alcalins et les métaux alcalino-terreux, et notamment les composés de Al, Se, Ti, Mg, Mn, Fe, Co, Ni, Cu, Zn, Zr, Sn, Hf, Pb, Bi, Sb, In, Li, Na, K ;
- et leurs mélanges.

Selon l'invention, le durcisseur est choisi parmi les anhydrides d'acide carboxylique comportant au moins une fonction -C(O)-O-C(O)- et les acides comportant au moins deux fonctions acides carboxyliques -C(O)OH,.

Selon l'invention, le polyol est choisi parmi le 1,3-propylène glycol, le 1,3-butanediol, le 1,4-butanediol, le 2,5-hexanediol, le 1,6-hexanediol, le butadiène diol, l'éthylène glycol, le 1,2-propylène glycol, le néopentylglycol ; les polyéthylène glycols (PEG), les polypropylène glycols (PPG) ; le glycérol, le triméthyloléthane, le triméthylolpropane (TMP), le triméthylolbutane, le 1,2,6-hexanetriol ; l'érythritol, le pentaérythritol ; et leurs mélanges.

Il est entendu que la composition ne comprend pas de composé comportant un groupement associatif et une fonction permettant son greffage sur la résine thermodurcissable.

L'invention a en outre pour objet l'utilisation de la composition précitée pour la fabrication d'un objet en résine thermodurcie déformable à chaud, ainsi qu'un objet comprenant une résine thermodurcie obtenue à partir de la composition selon l'invention.

Elle a encore pour objet un procédé de déformation d'un objet tel que défini ci-dessus, tel qu'un procédé d'assemblage, de soudage, de réparation ou de recyclage, comprenant l'application à cet objet d'une contrainte mécanique à une température (T) supérieure à la température de transition vitreuse Tg de la résine thermodurcie.

Elle a enfin pour objet l'utilisation d'un ou plusieurs objets tels que décrits ci-dessus dans les domaines de l'automobile, l'aéronautique, le nautisme, l'aérospatiale, le sport, le bâtiment, l'électrique, l'isolation électrique, l'électronique, l'éolien, l'emballage ou l'imprimerie.

### DESCRIPTION DETAILLEE

Comme indiqué précédemment, la composition selon l'invention renferme au moins un catalyseur d'effet vitrimère. Il est entendu que ce catalyseur est présent, dans la composition de l'invention, en plus des catalyseurs susceptibles d'être déjà présents de façon intrinsèque dans la résine thermodurcissable et/ou dans le durcisseur, du fait de leur préparation pouvant être réalisée en présence de catalyseurs en faible teneur, ou en plus des catalyseurs classiques d'ouverture de cycle époxyde.

Ce catalyseur d'effet vitrimère est notamment choisi parmi les catalyseurs organiques, les composés métalliques et leurs mélanges.

Comme catalyseur organique d'effet vitrimère, on peut citer comme composés préférés, la 4-pyrrolidinopyridine et la diméthylaminopyridine ; les composés de type guanidine répondant à la formule (I), et leurs mélanges : 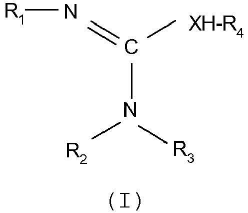 dans laquelle :
X désigne un atome d'azote ou un groupe -CH-,
R₁ désigne un atome d'hydrogène, un groupe alkyle en C₁-C₆ ou un groupe phényle pouvant être substitués par un groupe alkyle en C₁-C₄,
R₂, R₃ et R₄ désignent indépendamment un atome d'hydrogène, un groupe alkyle en C₁-C₆, ou un groupe phényle pouvant être substitués par un groupe alkyle en C₁-C₄, ou un groupe acétyle,
ou R₁ et R₂ forment ensemble et avec les atomes auxquels ils sont liés un hétérocycle saturé ou insaturé et/ou R₃ et R₄ forment ensemble et avec les atomes auxquels ils sont liés un hétérocycle saturé ou insaturé,

On préfère que R₁ et R₂ forment ensemble et avec les atomes auxquels ils sont liés un hétérocycle saturé ou insaturé, de préférence insaturé, et en ce que R₃ et R₄ forment ensemble et avec les atomes auxquels ils sont liés un hétérocycle saturé ou insaturé, de préférence saturé.

On préfère que les groupes alkyle en C₁-C₆ ou phényle ne soient pas substitués, et ne comprennent d'atome d'azote.

Des exemples de catalyseurs de type guanidine utilisables dans la présente invention sont les suivants :

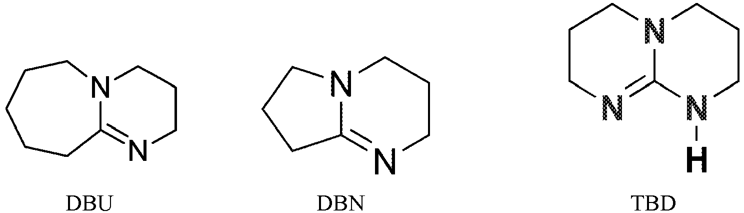

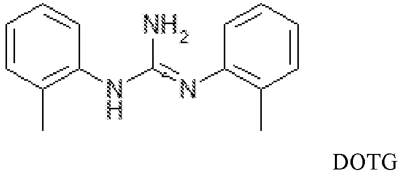

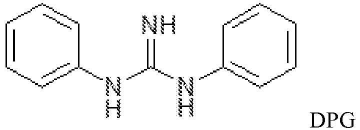

Préférentiellement, le catalyseur de type guanidine est le triazabicyclodécène (TBD).

Comme sels ou complexes métalliques organiques ou inorganiques, on peut citer en particulier les phosphates, carbonates, oxydes, hydroxydes, sulfures, carboxylates, alcoolates, acétylacétonates ou dikétiminates, ou les composés organo-métalliques, de métaux choisis parmi Ti, Zn, Zr et Bi.

Plus préférentiellement, on utilise comme catalyseur métallique d'effet vitrimère, l'acétylacétonate de zinc ou Zn(acac)₂ et les alcoolates de titane, tels que le propoxyde de titane, l'isopropoxyde de titane, le butoxyde de titane et les composés résultant de la réaction de ces alcoolates avec des glycols, tels que les composés obtenus selon la réaction suivante : 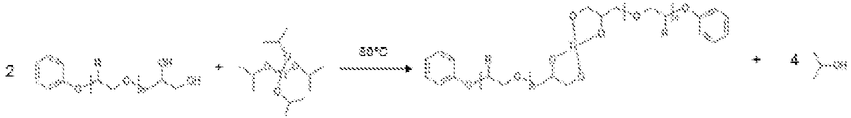 Avec R = H, méthyle
n allant de 0 à 100
en particulier le bis(3-phenoxy-1,2-propandioxyde) de titane, désigné ici par "Ti(PPD)₂", obtenu avec n = 0 dans la réaction ci-dessus.

Selon un mode de réalisation de l'invention, le catalyseur représente de 0,1 à 50% en mol, de préférence de 0,1 à 15% en mol, plus préférentiellement de 0,5 à 10% en mol, relativement à la quantité molaire de fonctions époxy contenues dans ladite résine thermodurcissable.

La composition selon l'invention comprend au moins un durcisseur de résine thermodurcissable, dit "durcisseur acide", qui peut être de type anhydride d'acide carboxylique, c'est-à-dire comportant au moins une fonction -C(O)-OC(O)-, ou de type acide, comportant au moins deux fonctions acides carboxyliques -C(O)OH. Selon un mode de réalisation, le durcisseur acide comprend au moins trois fonctions acides (qu'elles soient sous forme acide carboxylique libre ou anhydride d'acide). Ceci permet de créer un réseau tridimensionnel lorsqu'un tel durcisseur est employé pour réticuler une résine thermodurcissable.

On préfère selon l'invention utiliser un durcisseur de type anhydride d'acide carboxylique.

On peut notamment utiliser comme durcisseurs de type anhydride les anhydrides cycliques, comme par exemple l'anhydride phtalique, l'anhydride nadique ou méthylnadique, l'anhydride dodécénylsuccinique (DDSA), l'anhydride glutarique; les anhydrides aromatiques partiellement ou totalement hydrogénés comme l'anhydride tétrahydrophtalique, ou méthyltétrahydrophtalique, l'anhydride hexahydrophtalique ou méthylhexahydrophtalique; et leurs mélanges.

On peut encore citer comme durcisseurs de type anhydride, l'anhydride succinique, l'anhydride maléique, l'anhydride trimellitique, l'adduit d'anhydride trimellitique et d'éthylèneglycol, l'anhydride chlorendique, l'anhydride tétrachlorophtalique, le dianhydride pyromellitique (PMDA), le dianhydride d'acide 1,2,3,4 cyclopentanetétracarboxylique, les polyanhydrides d'acides aliphatiques tels que le polyanhydride polyazélaique, le polyanhydride polysébacique et leurs mélanges.

On peut notamment utiliser les anhydrides de formules suivantes, et leurs mélanges : 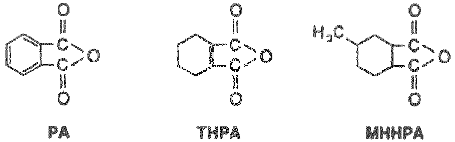 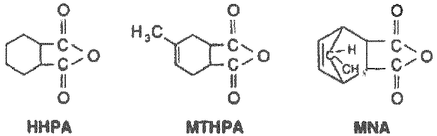 et plus préférentiellement le MTHPA.

On peut encore citer comme durcisseur de type anhydride le durcisseur de référence commerciale HY905® vendu par Huntsman, qui et un mélange liquide de plusieurs anhydrides.

Comme durcisseurs acides utilisables conformément à l'invention, on peut citer les acides carboxyliques comprenant de 2 à 40 atomes de carbone, les dérivés d'acides gras ainsi que leurs mélanges.

On peut aussi utiliser comme durcisseurs acides des diacides linéaires tels que les acides glutarique, adipique, pimélique, subérique, azélaïque, sébacique, succinique, dodécanedioïque et leurs homologues de masses supérieures ; et leurs mélanges.

On peut également utiliser comme durcisseurs acides des diacides aromatiques tels que l'acide ortho-, méta- ou paraphtalique, l'acide trimellitique, l'acide téréphtalique ou l'acide naphtalènedicarboxylique, ainsi que leurs dérivés plus ou moins alkylés et/ou partiellement hydrogénés, par exemple l'acide (méthyl)tétrahydrophtalique, l'acide (méthyl)hexahydrophtallique, l'acide (méthyl)nadique; et leurs mélanges.

Par « dérivé d'acide gras », en référence au durcisseur acide, on entend de préférence un acide gras, un ester d'acide gras, un triglycéride, un ester d'acide gras et d'alcool gras, un oligomère d'acide gras, notamment un dimère d'acide gras (oligomère de 2 monomères identiques ou différents) ou un trimère d'acide gras (oligomère de 3 monomères identiques ou différents), et leurs mélanges.

On peut ainsi utiliser comme durcisseurs acides des trimères d'acides gras ou un mélange de dimères et trimères d'acides gras, comprenant avantageusement de 2 à 40 atomes de carbone, avantageusement d'origine végétale. Ces composés résultent de l'oligomérisation d'acides gras insaturés tels que : l'acide undécylénique, myristoléique, palmitoléique, oléique, linoléique, linolénique, ricinoléique, eicosénoïque, docosénoïque, que l'on trouve habituellement dans les huiles de pin, colza, maïs, tournesol, soja, pépins de raisin, lin, jojoba, ainsi que les acides eicosapentaénoïque et docosahexaénoïque que l'on trouve dans les huiles de poissons ; et leurs mélanges.

On peut citer comme exemple de trimère d'acide gras, le composé de formule suivante, qui illustre un trimère cyclique issu d'acides gras à 18 atomes de carbone, sachant que les composés disponibles dans le commerce sont des mélanges d'isomères stériques et d'isomères de position de cette structure, éventuellement partiellement ou totalement hydrogénés.

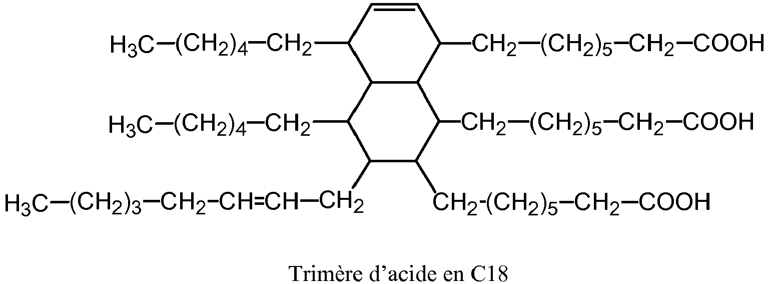

On peut par exemple utiliser un mélange d'oligomères d'acides gras contenant des dimères, trimères et monomères d'acides gras en C18 linéaires ou cycliques, ledit mélange étant majoritaire en dimères et trimères et contenant un faible pourcentage (habituellement, moins de 5%) de monomères. De manière préférée, ledit mélange comprend :
- 0,1 à 40% en poids, de préférence 0,1 à 5% en poids de monomères d'acides gras identiques ou différents,
- 0,1 à 99% en poids, de préférence 18 à 85% en poids de dimères d'acides gras identiques ou différents, et
- 0,1 à 90% en poids, de préférence 5 à 85% en poids, de trimères d'acides gras identiques ou différents.

On peut citer, comme exemples de mélanges dimères/trimères d'acides gras (% en poids) :
- le Pripol® 1017 de Croda, mélange de 75-80% de dimères et 18-22% de trimères avec de l'ordre de 1-3 % d'acides gras monomères,
- le Pripol® 1048 de Croda, mélange de 50/50% de dimères/trimères,
- le Pripol® 1013 de Croda, mélange de 95-98% de dimères et de 2-4% de trimères avec 0,2 % maximum d'acides gras monomères,
- le Pripol® 1006 de Croda, mélange de 92-98% de dimères et d'un maximum de 4% de trimères avec 0,4 % maximum d'acides gras monomères,
- le Pripol® 1040 de Croda, mélange de dimères et de trimères d'acide gras avec au moins 75% de trimères et moins de 1% d'acides gras monomères,
- l'Unidyme® 60 d'Arizona Chemicals, mélange de 33% de dimères et de 67% de trimères avec moins de 1% d'acides gras monomères,
- l'Unidyme® 40 d'Arizona Chemicals, mélange de 65% de dimères et de 35% de trimères avec moins de 1% d'acides gras monomères,
- l'Unidyme® 14 d'Arizona Chemicals, mélange de 94% de dimères et de moins de 5% de trimères et autres oligomères supérieurs avec de l'ordre de 1% d'acides gras monomères,
- l'Empol® 1008 de Cognis, mélange de 92% de dimères et de 3% d'oligomères supérieurs, essentiellement des trimères, avec de l'ordre de 5% d'acides gras monomères,
- l'Empol® 1018 de Cognis, mélange de 81 % de dimères et de 14% d'oligomères supérieurs, dont essentiellement des trimères, avec de l'ordre de 5 % d'acides gras monomères,
- le Radiacid® 0980 d'Oleon, mélange de dimères et trimères avec au moins 70% de trimères.

Les produits Pripol®, Unidyme®, Empol®, et Radiacid® comprennent des monomères d'acides gras en C18 et des oligomères d'acides gras correspondant à des multiples de C18.

On peut également citer comme durcisseurs acides les polyoxoalkylènes (polyoxoéthylène, polyoxopropylène, ...) comportant des fonctions acides carboxyliques aux extrémités, les polymères comportant des fonctions acides carboxyliques aux extrémités, ayant une structure branchée ou non, avantageusement choisis parmi les polyesters et polyamides et de préférence parmi les polyesters ; et leurs mélanges.

On peut encore citer au titre de durcisseur acide l'acide phosphorique.

La quantité de durcisseur est telle que le nombre de moles de fonctions époxyde de la résine peut aller de 50 à 300%, de préférence de 100% à 200%, de préférence de 125 à 150%, relativement au nombre de moles de fonctions acide ou anhydride du durcisseur.

La composition selon l'invention peut comprendre également au moins une résine thermodurcissable comportant au moins une et avantageusement plusieurs fonctions époxyde et optionnellement au moins une et avantageusement plusieurs fonctions hydroxyles libres et/ou fonctions ester. On désignera une telle résine par « résine époxy ».

De façon avantageuse, la résine époxy représente au moins 10 % en poids, au moins 20 % en poids, au moins 40 % en poids, au moins 60 % en poids, voire 100% en poids, du poids total de résine thermodurcissable présente dans la composition.

Il existe deux grandes catégories de résines époxy : les résines époxy de type glycidyle, et les résines époxy de type non glycidyle. Les résines époxy de type glycidyle sont elles-mêmes classées en glycidyle éther, glycidyle ester et glycidyle amine. Les résines époxy non glycidyle sont de type aliphatique ou cycloaliphatique. Les résines époxy glycidyle sont préparées par une réaction de condensation d'un diol, diacide ou diamine avec de l'épichlorhydrine. Les résine époxy non glycidyle sont formées par peroxydation des doubles liaisons oléfiniques d'un polymère.

Parmi les éthers époxy glycidyle, le diglycidyl éther de bisphénol A (DGEBA) représenté ci-dessous est le plus couramment utilisé.

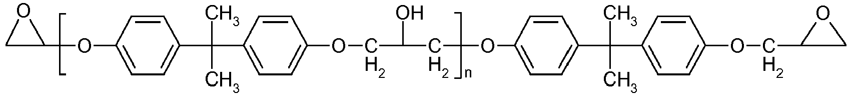

Les résines à base de DGEBA ont d'excellentes propriétés électriques, un faible retrait, une bonne adhérence sur de nombreux métaux et une bonne résistance à l'humidité, aux chocs mécaniques et une bonne résistance thermique.

Les propriétés des résines DGEBA dépendent de la valeur du degré de polymérisation n, qui lui-même dépend de la stoechiométrie de la réaction de synthèse. En règle générale, n varie de 0 à 25.

Les résines époxy Novolac (dont la formule est représentée ci-dessous) sont des glycidyléthers de résines phénoliques novolaques. Elles sont obtenues par réaction du phénol avec le formaldéhyde en présence d'un catalyseur acide pour produire une résine phénolique novolaque, suivie d'une réaction avec l'épichlorhydrine en présence d'hydroxyde de sodium comme catalyseur.

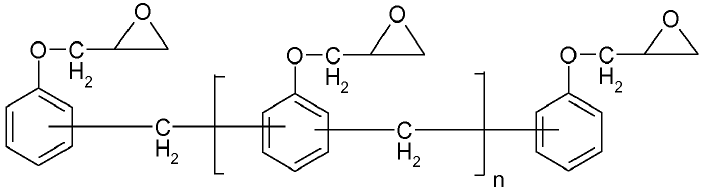

Les résines époxy Novolac contiennent généralement plusieurs groupes époxyde. Les multiples groupes époxyde permettent de réaliser des résines thermodurcies de haute densité de réticulation. Les résines époxy Novolac sont largement utilisées pour fabriquer des matériaux pour la microélectronique en raison de leur résistance supérieure à une température élevée, de leur excellente aptitude au moulage, et de leurs propriétés supérieures mécaniques, électriques, de résistance à la chaleur et à l'humidité.

La résine thermodurcissable utilisable dans la présente invention peut par exemple être choisie parmi : les résines époxy Novolac, le bisphénol A diglycidyl éther (DGEBA), le bisphénol A diglycidyl éther hydrogéné, le bisphénol F diglycidyl éther, le tétraglycidyl méthylène dianiline, le pentaérythritol tétraglycidyl éther, le triméthylol triglycidyl ether (TMPTGE), le tétrabromo bisphénol A diglycidyl éther, ou les hydroquinone diglycidyl éther, l'éthylène glycol diglycidyl éther, le propylène glycol diglycidyl éther, le butylène glycol diglycidyl éther, le néopentyl glycol diglycidyl éther, le 1,4-butanediol diglycidyl éther, le 1,6-hexanediol diglycidyl éther, le cyclohexanediméthanol diglycidyl éther, le polyéthylène glycol diglycidyl éther, le polypropylène glycol diglycidyl éther, le polytétraméthylène glycol diglycidyl éther, le résorcinol diglycidyl éther, le néopentylglycol diglycidyl éther, le bisphénol A polyéthylène glycol diglycidyl éther, le bisphénol A polypropylèneglycol diglycidyl éther, le diglycidyl ester d'acide téréphtalique, le poly(glycidyle-acrylate), le poly(glycidyle-méthacrylate), les acides gras polyinsaturés époxydés, les huiles végétales époxydées notamment l'huile de soja époxydée, les huiles de poissons époxydées, et le limonène époxydé; les glycidyl esters de l'acide versatique tels que ceux commercialisés sous la dénomination CARDURA® E8, E10 ou E12 par la société Momentive (CARDURA® E10 de CAS 26761-45-5); les résines cycloaliphatiques époxydées commercialisées sous la dénomination ARALDITE® CY179, CY184, MY0510 et MY720 par la société BASF, les résines CY179 et la CY184 répondant respectivement aux formules suivantes : 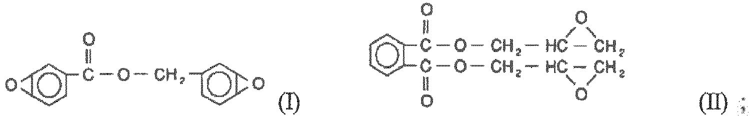 le triglycidyl isocyanurate (TGIC) ; le glycidyl méthacrylate, les glycidyl (méth)acrylates alkoxylés ; les C8-C10 alkyl glycidyl éthers, les C12-C14 alkyl glycidyl ethers, le glycidyl ester d'acide néodecanoïque, le butyl glycidyl éther, le crésyl glycidyl éther, le phényl glycidyl éther, le p-nonyphényl glycidyl éther, le p-nonylphényl glycidyl éther, le p-t-butyl phényl glycidyl éther, le 2-éthylhexyl glycidyl éther, le néopentyl glycol diglycidyl éther, le diglycidyl ester de dimère d'acide, le cyclohexane diméthanol diglycidyl éther, le polyglycidyl éther d'huile de riçin ; et les mélanges des résines précitées.

Avantageusement, elle est plus particulièrement choisie parmi : le DGEBA, le bisphénol F diglycidyl éther, les résines Novolac, le TMPTGE, le 1,4-butanediol diglycidyl éther, l'ARALDITE®CY184 de formule (II) ci-dessus, le TGIC, l'huile de soja époxydée et leurs mélanges. Plus préférentiellement encore, il s'agit du DGEBA.

La composition selon l'invention comprend en outre au moins un polyol, c'est-à-dire un composé renfermant au moins deux fonctions hydroxyle. Des exemples de tels composés sont notamment des polyhydroxyalcanes linéaires ou ramifiés ne comportant pas de fonction aminée.

Parmi les diols, on peut choisir le 1,3-propylène glycol, le 1,3-butanediol, le 1,4-butanediol, le 2,5-hexanediol, le 1,6-hexanediol et le butadiène diol. Parmi les glycols, on peut choisir l'éthylène glycol, le 1,2-propylène glycol, le néopentylglycol ; les polyalkylènes glycols sont choisis en particulier parmi les polyéthylène glycols (PEG), ou les polypropylène glycols (PPG) ; les triols préférés sont le glycérol, le triméthyloléthane, le triméthylolpropane (TMP), le triméthylolbutane et le 1,2,6-hexanetriol ; on peut également utiliser un tétraol, par exemple l'érythritol ou le pentaérythritol.

On préfère utiliser comme polyol, le glycérol, le triméthylolpropane ou le pentaérythritol.

Le polyol peut représenter de 0,5% à 40% et de préférence de 2% à 25 % en moles de fonctions hydroxy, par rapport au nombre de moles de fonctions époxyde de la résine thermodurcissable.

La composition de l'invention peut éventuellement comprendre un ou plusieurs composés additionnels, dans la mesure où leur présence n'altère pas les propriétés avantageuses qui découlent de l'invention. Des exemples de tels composés additionnels sont : des polymères, des pigments, des colorants, des charges, des plastifiants, des fibres longues ou courtes, tissées ou non, des agents retardateurs de flamme, des agents antioxydants, des lubrifiants, du bois, du verre, des métaux et leurs mélanges.

Avantageusement, la teneur en résine thermodurcissable et/ou en durcisseur va de 10% à 90 % en poids, notamment de 20 % à 80 % en poids voire de 30 à 70 % en poids, relativement au poids total de la composition, le complément à 100 % étant apporté par le catalyseur, le polyol et éventuellement par des composés additionnels choisis parmi les composés précités.

Parmi les polymères qui peuvent être employés en mélange avec la composition de l'invention, on peut mentionner : des élastomères thermodurs, des thermoplastiques, des élastomères thermoplastiques, des additifs chocs et leurs mélanges.

Par pigments, on entend des particules colorées insolubles dans la composition de l'invention. Comme pigments utilisables selon l'invention, on peut citer l'oxyde de titane, le noir de carbone, les nanotubes de carbone, les particules métalliques, la silice, les oxydes métalliques, les sulfures métalliques ou tout autre pigment minéral, on peut également citer les phtalocyanines, les anthraquinones, les quinacridones, les dioxazines, les pigments azoïques ou tout autre pigment organique, les pigments naturels (garance, indigo, pourpre, cochenille, etc) et les mélanges de pigments.

Par colorants, on entend des molécules solubles dans la composition de l'invention et ayant la capacité d'absorber une partie du rayonnement visible.

Parmi les charges qui peuvent être employées dans la composition de l'invention, on peut mentionner les charges classiquement utilisées dans les formulations de polymères. On peut citer sans que cela soit limitatif : la silice, les argiles, le noir de carbone, le kaolin, le talc, le carbonate de calcium, les whiskers et leurs mélanges.

Parmi les fibres qui peuvent être employées dans la composition de l'invention, on peut mentionner : des fibres de verre, des fibres de carbone, des fibres polyester, des fibres polyamides, des fibres aramides, des fibres cellulosiques et nanocellulosiques ou encore des fibres végétales (lin, chanvre, sisal, bambou...) et leurs mélanges.

La présence, dans la composition de l'invention, de pigments, de colorants ou de fibres capables d'absorber le rayonnement, ou leurs mélanges, peut servir à assurer le chauffage d'un matériau ou d'un objet fabriqué à partir d'une telle composition, au moyen d'une source de rayonnement telle qu'un laser.

La présence, dans la composition de l'invention, de pigments, de fibres ou de charges conductrices de l'électricité tels que noir de carbone, nanotubes de carbone, fibres de carbone, poudres métalliques, particules magnétiques ou leurs mélanges, peut être utilisée pour assurer le chauffage d'un matériau ou d'un objet fabriqué à partir d'une telle composition, par effet Joule, par induction ou par micro-ondes. Un tel chauffage peut permettre la mise en oeuvre d'un procédé de fabrication, de transformation ou de recyclage d'un matériau ou d'un objet suivant un procédé qui sera décrit plus loin.

Les composés additionnels peuvent aussi être choisis parmi un ou plusieurs autres catalyseurs et/ou durcisseurs, de toutes natures connues de l'homme du métier comme jouant ces rôles dans la mesure ou ils n'altèrent pas les propriétés avantageuses découlant de l'invention. Ils seront désignés par « catalyseur supplémentaire » et « durcisseur supplémentaire ».

Selon une forme d'exécution préférée de l'invention, la composition décrite ici renferme un ou plusieurs catalyseurs supplémentaires qui sont spécifiques de l'ouverture d'époxyde, telles que :
- les amines tertiaires, éventuellement bloquées, comme par exemple: le 2,4,6-tris(diméthylaminométhyl)phénol (par exemple commercialisée sous le nom Ancamine), o-(diméthylaminométhyl) phénol, la benzyldiméthylamine (BDMA), le 1,4-diazabicyclo(2,2,2)octane (DABCO), le chlorure de méthyltribenzyl ammonium.
- les imidazoles, comme les 2-méthylimidazole (2-MI), 2-phénylimidazole (2-PI), 2-éthyl-4-méthyl-imidazole (EMI), 1-propylimidazole, chlorure de 1-éthyl-3-méthylimidazolium, 1-(2-hydroxypropyl)imidazole.
- les phosphoniums : les halogénures de tetraalkyl et alkyltriphénylphosphonium.
- les sels d'amine de polyacides, les condensats aniline-formaldéhyde, les N,N-alcanolamines, les borates de trialcanolamines, les fluoroborates comme la monoéthylamine de trifluorure de bore (BF3-MEA), les phosphines organosubstituées, les sels de monoimidazoline quaternaire, des mercaptans, des polysulfures.
- et leurs mélanges.

Préférentiellement, le catalyseur d'ouverture d'époxyde est choisi parmi : les amines tertiaires, les imidazoles, et leurs mélanges.

Les amines (hétéro)aromatiques telles que la 2-méthylimidazole et le tris(diméthylaminométhyl)phénol sont plus particulièrement préférées pour une utilisation dans cette invention.

Le catalyseur supplémentaire d'ouverture d'époxyde est avantageusement mis en oeuvre dans la composition à raison de 0,1% à 5% molaire par rapport au nombre de moles de fonctions époxydes portées par la résine thermodurcissable.

On peut aussi mettre en oeuvre un ou plusieurs catalyseurs supplémentaires d'effet vitrimère choisis parmi les catalyseurs cités dans les demandes WO2011/151584, WO2012/101078 et WO 2012/152859, toujours dans la mesure ou leur présence n'altère pas les propriétés avantageuses découlant de l'invention.

Le catalyseur supplémentaire d'effet vitrimère peut par exemple être présent dans la composition de l'invention à raison de 0,1 à 10 % en poids et de préférence de 0,1 à 5 % en poids relativement au poids total de la composition.

Par ailleurs, l'utilisation d'un durcisseur supplémentaire permet d'obtenir, pour les matériaux fabriqués *in fine,* une large gamme de propriétés mécaniques à la température ambiante (par exemple contrôle de la température de transition vitreuse et/ou du module d'une résine thermodurcie).

Comme exemples de durcisseurs supplémentaires, on peut mentionner les durcisseurs de résine époxy, en particulier ceux choisis parmi les aminés, les polyamides, les résines phénoliques, les isocyanates, les polymercaptans, les dicyanodiamides et leurs mélanges.

En particulier, un durcisseur supplémentaire de type amine peut être choisi parmi les amines primaires ou secondaires ayant au moins une fonction -NH₂ ou deux fonctions -NH et de 2 à 40 atomes de carbone. Ces amines peuvent par exemple être choisies parmi les amines aliphatiques telles que la diéthylène triamine, la triéthylène tétramine, la tétraéthylène pentamine, la dihexylène triamine, la cadavérine, la putrescine, l'hexanediamine, la spermine, l'isophorone diamine, ainsi que les amines aromatiques telles que la phénylène diamine, le diamino diphénylméthane, la diamino diphénylsulfone, la méthylène bischlorodiéthylaniline, la meta-xylylène diamine (MXDA) et ses dérivés hydrogénés tels que le 1,3-bis(aminométhyl cyclohexane) (1,3-BAC) ; et leurs mélanges.

Un durcisseur supplémentaire de type amine peut encore être choisi parmi les polyetheramines, par exemple les JEFFAMINE® de Huntsman, éventuellement en mélanges avec d'autres durcisseurs supplémentaires.

Comme durcisseurs supplémentaires préférés, on peut citer la diéthylène triamine, la triéthylène tétramine, l'hexanediamine, et leurs mélanges.

### Procédé de préparation de la composition

Les composés de la composition selon l'invention sont soit disponibles commercialement, soit facilement synthétisables par l'homme du métier à partir de matières premières disponibles commercialement.

La composition de l'invention peut être obtenue par simple mise en contact des composés qu'elle renferme. Cette mise en contact est de préférence effectuée à une température allant de 15°C à 130°C, notamment de 50°C à 125°C. La mise en contact peut être effectuée avec ou sans moyen d'homogénéisation.

Selon un mode de réalisation particulier, le procédé comprend une première étape au cours de laquelle le catalyseur est préintroduit dans la résine ou le durcisseur, de préférence dans le durcisseur. Le catalyseur peut être alors sous forme de dispersion s'il s'agit d'une poudre, ou d'une solution. Cette dispersion ou mise en solution peut être effectuée à température ambiante ou à chaud pour obtenir les caractéristiques de viscosité souhaitées.

Le polyol est généralement introduit avec l'un des composants de la composition, en particulier il est incorporé dans le durcisseur, et peut faciliter ainsi la solubilisation du catalyseur dans le durcisseur.

### Kits

La composition conforme à l'invention peut être préparée à partir d'un kit comportant au moins :
- une première composition comprenant le catalyseur, seul, ou avec le durcisseur ou la résine thermodurcissable ou le polyol ;
- éventuellement une deuxième composition comprenant le polyol ;
- éventuellement une troisième composition comprenant le durcisseur ;
- éventuellement une quatrième composition comprenant la résine thermodurcissable.

Les différentes compositions peuvent être stockées ensemble ou séparément. Il est aussi possible de stocker ensemble certaines des compositions tout en les maintenant séparées des autres compositions.

Les différentes compositions sont stockées généralement à température ambiante.

De préférence, la composition comprenant le catalyseur comprend également le durcisseur et le polyol.

De préférence, lorsque les troisième et quatrième compositions sont toutes deux présentes dans le kit, elles sont dans un conditionnement adapté pour empêcher qu'une réaction de réticulation entre la résine thermodurcissable et le durcisseur ne se produise sans intervention d'un opérateur.

Le conditionnement peut consister en un récipient comportant deux voire trois ou quatre compartiments internes permettant le stockage séparé de chacune des compositions. Selon une variante, le kit peut consister en un seul et unique récipient, contenant un mélange en quantités appropriées des deux ou trois compositions. Dans ce dernier cas, l'intervention de l'opérateur se limite avantageusement à un chauffage.

Il peut être prévu un moyen permettant la mise en contact des contenus des différents compartiments, avantageusement de façon à permettre d'initier la réticulation dans le récipient.

On peut aussi prévoir un kit consistant en plusieurs flacons distincts associés dans un même emballage et comportant chacun les quantités adaptées de chacune des compositions pour la préparation de la composition de l'invention, de façon à éviter à l'utilisateur des opérations de pesée et/ou de dosage.

### Utilisations

La composition décrite précédemment peut être utilisée pour la fabrication d'un objet en résine thermodurcie déformable à chaud.

La résine thermodurcie obtenue à partir de la composition selon l'invention présente avantageusement :
- un temps de relaxation τ nécessaire pour obtenir une valeur de contrainte normalisée égale à 1/e à une température égale à Tg + 100°C et/ou à 200°C, qui est inférieur à 5000 secondes, de préférence inférieur à 2000 secondes, plus préférentiellement inférieur à 1000 secondes,
- un pourcentage de contraintes **σ** relaxées au bout de 5000 secondes à une température égale à Tg + 100°C et/ou à 200°C, qui est d'au moins 80%, de préférence d'au moins 90%, plus préférentiellement d'au moins 95%, voire de 100%,
ces grandeurs étant mesurées suivant les protocoles indiqués dans les exemples ci-après.

### Objets et leurs procédés de fabrication

L'invention porte également sur un objet comprenant une résine thermodurcie obtenue à partir d'au moins une composition conforme à l'invention.

Par « objet », on entend au sens de la présente invention, une pièce en trois dimensions. On inclut dans cette définition les revêtements, les films, les feuilles, les rubans, etc. Les objets selon l'invention peuvent notamment consister en des revêtements déposés sur un support, comme une couche de protection, une peinture ou encore un film adhésif. On inclut également les poudres, les granulés, etc...

L'objet selon l'invention peut être fabriqué suivant un procédé de fabrication comprenant :
a) la préparation ou la mise à disposition d'une composition renfermant une résine thermodurcissable de type époxy, un durcisseur, un catalyseur d'effet vitrimère et un polyol, à partir de la composition conforme à l'invention,
b) la mise en forme de la composition issue de l'étape a)
c) l'application d'une énergie permettant le durcissement de la résine,
d) le refroidissement de la résine thermodurcie.

Les étapes a) b) c) du procédé peuvent être successives ou simultanées.

La préparation de la composition peut se faire dans un mélangeur de tout type connu de l'homme du métier. Elle peut notamment se faire par mise en contact des compositions décrites en relation avec le kit de manière à former une composition selon l'invention.

La mise en forme peut être effectuée par toute technique connue de l'homme du métier dans le domaine des résines thermodurcissables, notamment par moulage. Notablement, l'invention permet de prévoir également d'autres modes de mise en forme tels que le coulage, l'enroulement filamentaire, le moulage en continu ou entre pellicules, l'infusion, la pultrusion, le moulage par transfert de résine ou RTM (pour "resin transfer molding"), la réaction-injection-moulage (ou RIM) ou toutes autres méthodes connues de l'homme de l'art, telles que décrites dans les ouvrages «Epoxy Polymer», édité par J.P. Pascault et R.J.J. Williams, Wiley-VCH, Weinheim 2010 ou «Chimie industrielle », par R. Perrin et J.P. Scharff, Dunod, Paris 1999.

La mise en forme peut consister en une mise sous forme de poudre ou de grains par toute technique connue de l'homme du métier. Un broyage mécanique peut également être effectué à l'issue de l'étape d).

Pour ce qui concerne la mise en forme de la composition sous forme de revêtement, on peut avantageusement mettre en oeuvre toute méthode connue en la matière, en particulier : l'application de la composition à la brosse ou au rouleau ; le trempage d'un support à revêtir dans la composition ; l'application de la composition sous forme d'une poudre.

Si l'on essaye de mettre en forme une composition de résine thermodurcie de l'art antérieur de la même manière que décrit plus haut, le matériau ou l'objet obtenu n'est plus déformable ni réparable, ni recyclable une fois que le point de gel de la résine est atteint ou dépassé. L'application d'une température modérée à un tel objet selon l'art antérieur ne conduit à aucune transformation observable ou mesurable, et l'application d'une température très élevée conduit à la dégradation de cet objet.

Au contraire, les objets de l'invention, du fait qu'ils sont fabriqués à partir d'une composition conforme à l'invention, peuvent être déformés, soudés, réparés et recyclés par une élévation de leur température.

Par « application d'une énergie permettant le durcissement de la résine » on entend généralement une élévation de température. L'application d'une énergie permettant le durcissement de la résine peut par exemple consister en un chauffage à une température allant de 50 à 250°C, par exemple de 50 à 120°C. On peut aussi effectuer une activation par radiations, par exemple par rayons UV ou faisceau électronique, ou par voie chimique, en particulier radicalaire, par exemple au moyen de peroxydes.

Le refroidissement de la résine thermodurcie est habituellement opéré en laissant le matériau ou l'objet revenir à la température ambiante, avec ou sans utilisation d'un moyen de refroidissement.

Un objet conforme à l'invention peut être composite. Il peut notamment résulter de l'assemblage d'au moins deux objets, dont l'un au moins, et avantageusement les deux, comporte au moins une résine thermodurcie obtenue à partir d'au moins une composition conforme à l'invention.

Il s'agit par exemple d'un matériau stratifié, comportant une superposition en alternance de couches de résine thermodurcie obtenue à partir d'au moins une composition conforme à l'invention, avec des couches de bois, de métal, ou de verre.

Un objet de l'invention peut également comprendre un ou plusieurs composants additionnels choisis parmi ceux précités et en particulier: des polymères, des pigments, des colorants, des charges, des plastifiants, des fibres longues ou courtes, tissées ou non, des agents retardateurs de flamme, des agents antioxydants, des lubrifiants, du bois, du verre, des métaux. Lorsqu'un tel objet est fabriqué conformément à l'un des procédés de fabrication décrits plus haut, les composés additionnels peuvent être introduits avant, pendant ou après l'étape a).

### Procédé de déformation

Les résines thermodurcies obtenues comme décrit ici présentent l'avantage de présenter une variation lente de viscosité sur une large gamme de températures, ce qui rend le comportement d'un objet de l'invention comparable à celui des verres inorganiques et permet de leur appliquer des procédés de déformation qui ne sont généralement pas applicables aux thermodurs classiques.

Il peut ainsi être façonné en appliquant des contraintes de l'ordre de 1 à 10 MPa sans pour autant couler sous son propre poids.

De la même façon, on peut déformer cet objet à une température supérieure à la température Tg, puis dans un deuxième temps éliminer les contraintes internes à une température plus élevée.

La faible viscosité de ces objets à ces températures permet notamment l'injection ou le moulage sous presse. Il faut noter qu'aucune dépolymérisation n'est constatée à des températures élevées et les objets de l'invention conservent leur structure réticulée. Cette propriété permet la réparation d'un objet de l'invention qui se trouverait fracturé en au moins deux parties par un simple soudage de ces parties entre elles. Aucun moule n'est nécessaire pour maintenir la forme des objets de l'invention pendant le processus de réparation à des températures élevées. De la même façon, on peut transformer un objet de l'invention par application d'une contrainte mécanique à une partie seulement de l'objet sans faire appel à un moule car les objets de l'invention ne coulent pas. Toutefois, les objets de grande taille, qui ont davantage tendance à s'affaisser, pourront être maintenus par un bâti comme pour le travail du verre.

Ainsi, l'objet tel que décrit plus haut peut être déformé suivant un procédé comprenant l'application à l'objet d'une contrainte mécanique à une température (T) supérieure à la température de transition vitreuse. L'assemblage, le soudage, la réparation et le recyclage constituent un cas particulier de ce procédé de déformation. De préférence, pour permettre la déformation dans une durée compatible avec une application industrielle, le procédé de déformation comprend l'application à l'objet de l'invention d'une contrainte mécanique à une température (T) supérieure à la température de transition vitreuse Tg de la résine thermodurcie qu'il contient.

Habituellement, un tel procédé de déformation est suivi d'une étape de refroidissement jusqu'à la température ambiante, éventuellement avec application d'au moins une contrainte mécanique. Par « contrainte mécanique », on entend au sens de la présente invention, l'application d'une force mécanique, localement ou sur tout ou partie de l'objet, cette force mécanique tendant à une mise en forme ou une déformation de l'objet. Parmi les contraintes mécaniques qui peuvent être employées, on peut mentionner : la pression, le moulage, le malaxage, l'extrusion, le soufflage, l'injection, l'estampage, la torsion, la flexion, la traction et le cisaillement. Il peut s'agir par exemple d'une torsion appliquée à objet de l'invention sous forme de ruban. Il peut s'agir d'une pression appliquée à l'aide d'une plaque ou d'un moule sur une ou plusieurs faces d'un objet de l'invention, de l'estampage d'un motif dans une plaque ou une feuille. Il peut encore s'agir d'une pression exercée parallèlement sur deux objets de l'invention en contact l'un avec l'autre de façon à provoquer un soudage de ces objets. Dans le cas où l'objet de l'invention consiste en des granulés, la contrainte mécanique peut consister en un malaxage, par exemple au sein d'un mélangeur ou autour de la vis d'une extrudeuse. Elle peut aussi consister en une injection ou une extrusion. La contrainte mécanique peut également consister en un soufflage, qui peut par exemple être appliqué à une feuille d'objet de l'invention. La contrainte mécanique peut également consister en une multiplicité de contraintes distinctes, de même nature ou non, appliquées de façon simultanée ou successive à tout ou partie du objet de l'invention, ou de façon localisée.

Ce procédé de déformation peut inclure une étape de mélange ou d'agglomération de l'objet de l'invention avec un ou plusieurs composants additionnels choisis parmi ceux cités précédemment et en particulier : des polymères, des pigments, des colorants, des charges, des plastifiants, des fibres longues ou courtes, tissées ou non, des agents retardateurs de flamme, des agents antioxydants, des lubrifiants.

L'élévation de la température dans le procédé de déformation peut être réalisée par tout moyen connu comme le chauffage par conduction, convection, induction, par point, infra rouge, micro-onde ou radiant. Les moyens permettant de provoquer une élévation de température pour la mise en oeuvre des procédés de l'invention comprennent : un four, un four à micro-ondes, une résistance chauffante, une flamme, une réaction chimique exothermique, un faisceau laser, un fer à repasser, un pistolet à air chaud, une cuve à ultrasons, un poinçon chauffant... L'élévation de température peut être faite par pallier ou non et sa durée est adaptée au résultat attendu.

Bien que la résine ne coule pas durant sa déformation, grâce aux réactions d'échange interne, en choisissant une température, une durée de chauffage et des conditions de refroidissement appropriées, la nouvelle forme peut être exempte de toute contrainte résiduelle. L'objet n'est donc pas fragilisé ou fracturé par l'application de la contrainte mécanique. Et si l'objet déformé est ultérieurement réchauffé, il ne reviendra pas à sa forme première. En effet, les réactions d'échange interne qui surviennent à haute température favorisent une réorganisation des points de réticulation du réseau de la résine thermodurcie de manière à annuler les contraintes mécaniques. Une durée de chauffage suffisante permet d'annuler complètement ces contraintes mécaniques internes à l'objet qui ont été causées par l'application de la contrainte mécanique externe.

Cette méthode permet donc d'obtenir des formes complexes stables, difficiles voire impossibles à obtenir par moulage, à partir de formes élémentaires plus simples. Notamment, il est très difficile d'obtenir par moulage des formes résultant d'une torsion. De façon complémentaire, le choix de conditions de température, de durée de chauffage sous contrainte et de refroidissement appropriées permet de transformer un objet de l'invention tout en contrôlant la persistance de certaines contraintes mécaniques internes au sein de ce objet, puis, si l'objet ainsi transformé est ultérieurement réchauffé, une nouvelle déformation contrôlée de ce objet par libération contrôlée des contraintes peut être opérée.

### Procédés de recyclage

L'objet obtenu selon l'invention peut également être recyclé :
- soit par traitement direct de l'objet : par exemple un objet de l'invention cassé ou endommagé est réparé par un procédé de déformation tel que décrit ci-dessus et peut ainsi retrouver sa fonction d'usage antérieure ou une autre fonction ;
- soit l'objet est réduit en particules par application d'un broyage mécanique, et les particules ainsi obtenues sont ensuite mises en oeuvre dans un procédé de fabrication d'un objet conforme à l'invention. Notamment, selon ce procédé, les particules sont soumises simultanément à une élévation de température et à une contrainte mécanique permettant leur transformation en un objet conforme à l'invention.

La contrainte mécanique permettant la transformation des particules en objet peut par exemple comporter une compression dans un moule, un malaxage, et/ou une extrusion. Cette méthode permet notamment, par l'application d'une température suffisante et d'une contrainte mécanique appropriée, de mouler de nouveaux objets à partir des objets de l'invention.

Un autre avantage de l'invention est de permettre de fabriquer des objets à base de résine thermodurcie à partir de matières premières solides. Ces matières premières solides sont ainsi des objets selon l'invention sous forme de pièces, d'une unité élémentaire ou d'un ensemble d'unités élémentaires.

Par « unités élémentaires », on entend des pièces qui ont une forme et/ou un aspect adaptée à leur transformation ultérieure en objet, comme par exemple : particules, granulés, billes, bâtonnets, plaques, feuilles, films, rubans, tiges, tubes etc....

Par « ensemble d'unités élémentaires », on entend au moins 2 unités élémentaire, par exemple au moins 3, au moins 5, au moins 10, voire au moins 100 unités élémentaires.
Tout procédé connu de l'homme du métier peut être employé à cette fin. Ces pièces élémentaires sont ensuite transformables, sous l'action conjointe de la chaleur et d'une contrainte mécanique, en des objets de la forme souhaitée : par exemple, des rubans peuvent par estampage être découpés en pièces plus petites de forme choisie, des feuilles peuvent être superposées et assemblées par compression. Ces pièces élémentaires à base de résine thermodurcie sont plus facilement stockables, transportables et manipulables que les formulations liquides dont elles sont issues. En effet, l'étape de transformation des pièces élémentaires conforme à l'invention peut être réalisée par l'utilisateur final sans équipement de chimie (non toxicité, pas de date de péremption, pas de COV, pas de pesée de réactifs).

Un cas particulier du procédé de déformation déjà décrit comprend ainsi :
a) l'utilisation comme matière première d'un objet de l'invention sous forme d'une unité élémentaire ou d'un ensemble d'unités élémentaires,
b) l'application simultanée d'une contrainte mécanique et d'une élévation de température pour mettre en forme l'objet pour former un nouvel objet,
c) le refroidissement de l'objet résultant de l'étape b).

Un autre avantage de ce procédé est de permettre le recyclage du nouvel objet fabriqué, celui-ci pouvant être reconditionné sous forme d'unités ou pièces élémentaires qui peuvent à leur tour être remises en forme, conformément à l'invention.

Le procédé de recyclage d'un objet de l'invention peut comprendre :
a) l'utilisation d'un objet de l'invention comme matière première,
b) l'application d'une contrainte mécanique et éventuellement d'une élévation de température simultanée pour transformer cet objet en un ensemble d'unités élémentaires,
c) le refroidissement de cet ensemble d'unités élémentaires.

### Applications

Les domaines d'application de la présente invention sont principalement ceux des résines thermodurcissables, en particulier ceux des résines époxy, notamment l'automobile (ce qui regroupe tout type de véhicule motorisé y compris les poids-lourds), l'aéronautique, le nautisme, l'aérospatiale, le sport, le bâtiment, l'électrique, l'isolation électrique, l'électronique, l'éolien, l'emballage et l'imprimerie.

Les compositions, matériaux et objets de l'invention peuvent par exemple être incorporés dans des formulations, notamment avec des additifs typiques tels que des charges, des antioxydants, des retardateurs de flamme, des protecteurs UV, des pigments, des colorants. Les formulations peuvent par exemple servir au couchage du papier, à la fabrication d'encres, de peintures. Les matériaux ou objets de l'invention peuvent être utilisés sous forme de poudres, de granulés, ou encore être incorporés dans des matériaux composites, en particulier ceux comportant des fibres de verre, de carbone, d'aramide, ou d'origine végétale (fibres de lin, de chanvre,...). Ces fibres peuvent être des fibres longues ou des fibres courtes, tissées ou non. Les compositions de l'invention peuvent aussi être appliquées comme revêtements, par exemple comme vernis de protection des métaux, protection de tuyaux, protections de sols.

Les compositions de l'invention peuvent encore servir à fabriquer des adhésifs, avantageusement ceux thermoréticulables ou photoréticulables, à encapsuler des connecteurs (la composition de l'invention pouvant être appliquée par potting ou injection), à réaliser des pièces d'isolateurs électriques ou encore à réaliser des prototypes.

### EXEMPLES

Les exemples suivants illustrent l'invention sans la limiter.

### Exemple comparatif 1 : Synthèse d'un réseau époxy-anhydride en présence de 1% de TBD

On a préparé un matériau vitrimère comme décrit ci-dessous.
Dans un bécher ont été ajoutés une résine époxy de type DGEBA (DER332 de DOW, Masse Epoxy Equivalente : 174g/eq) sous forme de liquide visqueux, ainsi que du TBD (ALDRICH) à raison de 1% molaire de catalyseur par mole de fonctions époxyde. Le bécher a été placé dans un bain d'huile thermostaté à 100-120°C jusqu'à dissolution du catalyseur dans la résine pour obtenir un mélange homogène et transparent. On a alors ajouté à ce mélange, hors du bain, de l'anhydride méthyl tétrahydrophthalique (MTHPA) (MW = 166,18g/mol), dans un ratio molaire des fonctions époxyde de la résine aux fonctions anhydride du durcisseur de 1/0,8, puis l'ensemble a été homogénéisé quelques minutes dans le bain avant d'être coulé dans un moule métallique creux de 70x140x3mm légèrement siliconé. Le moule a été solidarisé par un joint en silicone à une plaque métallique recouverte d'un revêtement en Teflon, puis l'ensemble a été introduit dans une presse chauffante préalablement réglée à une température de 140°C et placée en début de cuisson à une pression de 10 bars. La cuisson a été effectuée pendant 17 heures.

On a mesuré la Tg et le module de conservation du matériau ainsi obtenu. Pour ce faire, un échantillon (ci-après, "échantillon 1") de ce matériau a été soumis à une analyse mécanique dynamique (DMA) Précisément, un barreau de dimensions 10x30x3mm a été fixé entre deux pinces et sollicité en torsion rectangulaire (déformation imposée de 0,05%) dans un appareil RDA3 de RHEOMETRIC SCIENTIFIC, avec une fréquence de 1 Hz, en effectuant un balayage en température de 25 à 250°C avec une rampe de température de 3°C/min. La valeur de Ta a été déterminée au sommet du pic de la courbe de tan8, et est considérée ci-après comme la Tg de l'échantillon, tandis que le module de conservation G' a été déterminé sur la plateau caoutchoutique à 200°C.
Ce matériau présentait une Tg de 148°C et un module de conservation G' de 14 MPa.

### Exemple 2 : Synthèse d'un réseau époxy-anhydride en présence de 1% de TBD et d'un polyol

On a préparé trois échantillons de manière identique à l'échantillon de l'exemple 1, excepté qu'un polyol a été ajouté dans le mélange réactionnel, incorporé sous forme liquide à l'anhydride. On a également mesuré la Tg et le module de conservation G' des matériaux ainsi obtenus, qui sont rassemblés dans le Tableau 1 ci-dessous.

**Tableau 1**

| Ech. | 2a | 2b | 2c |
|---|---|---|---|
| Polyol | Glycérol | Glycérol | TMP* |
| %mol _{OH/epoxy} | 10 | 20 | 10 |
| Tg (°C) | 146 | 144 | 144 |
| G' (MPa) | 15 | 15 | 16,7 |

| | | | |
|---|---|---|---|
| * triméthylol propane | | | |

On note que ces polyols permettent d'augmenter légèrement le module de conservation des matériaux, qui traduit leur densité de réticulation, sans affecter sensiblement leur Tg. Ceci montre que les polyols ont été incorporés au réseau polymérique et ne se comportent pas comme des plastifiants, contrairement à ce qui aurait pu être attendu.

### Exemple comparatif 3 : Synthèse d'un réseau époxy-anhydride en présence de 1% de DBU

Un échantillon de matériau (3) a été préparé de manière identique à l'exemple 1, excepté que le catalyseur était remplacé par du DBU (diazabicycloundécène). Ce matériau présente une Tg de 132°C et un module de conservation à 200°C de 13,6 MPa.

### Exemple 4 : Synthèse d'un réseau époxy-anhydride en présence de 1% de DBU et d'un polyol

On a préparé un échantillon (4) de manière identique à l'échantillon de l'exemple 3, excepté qu'un polyol (TMP) a été ajouté sous forme liquide au mélange réactionnel. Ce matériau présente une Tg de 132°C et un module de conservation à 200°C de 12,4 MPa.

### Exemple comparatif 5 : Synthèse d'un réseau époxy-anhydride en présence de 10% d'acétylacétonate de zinc

Un échantillon de matériau (5) a été préparé de manière identique à l'exemple 1, excepté que le catalyseur était remplacé par l'acétylacétonate de zinc ou Zn(acac)₂, avec un ratio molaire des fonctions époxyde de la résine aux fonctions anhydride du durcisseur de 1/1. Ce matériau présente une Tg de 130°C et un module de conservation à 200°C de 13,5 MPa,

### Exemple 6 : Synthèse d'un réseau époxy-anhydride en présence de 10% d'acétylacétonate de zinc et d'un polyol

On a préparé un échantillon (6) de manière identique à l'échantillon de l'exemple 5, excepté qu'un polyol (TMP) a été ajouté sous forme liquide au mélange réactionnel. Ce matériau présente une Tg de 125°C et un module de conservation à 200°C de 11 MPa.

La Tg et le module de conservation G' des matériaux ainsi obtenus dans les exemples 3 à 6, sont rassemblés dans le Tableau 2 ci-dessous.

**Tableau 2**

| Ech. | 3 | 4 | 5 | 6 |
|---|---|---|---|---|
| Polyol | - | TMP | - | TMP |
| %mol _{OH/epoxy} | 0 | 20 | 0 | 15 |
| Tg (°C) | 132 | 132 | 130 | 125 |
| G' (MPa) | 13,6 | 12,4 | 13,5 | 11 |

### Exemple 7 : Propriétés mécaniques

On a évalué les propriétés vitrimères des matériaux des Exemples 1 à 6.

Précisément, les échantillons 1, 2a à 2c, 3 à 6 ont été soumis à une expérience consistant à imposer à une éprouvette de 40x20x2mm une déformation sous flux d'azote, en flexion 3 points, à l'aide d'un appareil Metravib de type DMA50N, après que l'échantillon ait été porté à une température égale à Tg + 100°C ou à 200°C, et stabilisé pendant 5 min à cette température. L'évolution des contraintes induites dans le matériau pour maintenir la déformation constante est suivie pendant 5000 secondes et mesurée à l'aide d'un capteur. On impose ensuite à l'échantillon une force égale à zéro et on mesure la déformation (recouvrance) de l'échantillon pendant 5000 secondes supplémentaires. Lorsque le matériau conserve la déformation qui lui a été imposée, on considère que toutes les contraintes ont été relaxées. On trace ensuite la contrainte normalisée (σ/σο) en fonction du temps et on relève, pour chaque essai, le temps de relaxation τ nécessaire pour obtenir une valeur de contrainte normalisée égale à 1/e, ainsi que le pourcentage de contraintes relaxées à 5000 secondes, désigné ci-après par σ₅₀₀₀ₛ.

Les résultats obtenus sont rassemblés dans le Tableau 3 ci-dessous.

**Tableau 3**

| Ech. | 1 comp | 2a | 2b | 2c | 3 comp | 4 | 5 comp | 6 |
|---|---|---|---|---|---|---|---|---|
| τ (s) | 1015 | 385 | 315 | 670 | >5000 | 1560 | 1565 | 860 |
| σ₅₀₀₀ₛ (%) | 100 | 100 | 100 | 93 | 51 | 91 | 84 | 100 |

Comme il ressort de ce tableau, les catalyseurs selon l'invention (échantillons 2a à 2c, 4 et 6) permettent d'obtenir des matériaux capables de relaxer leurs contraintes de manière aussi complète, et plus rapide, que le matériau obtenu en l'absence de polyol dans le mélange réactionnel (échantillons 1, 3 et 5). Ils présentent donc de meilleures propriétés vitrimères.

### Exemple 8 : Etude de stabilité thermique

On a évalué la stabilité thermique du matériau des exemples 2a et 2b. Les résultats ont été comparés à ceux obtenus avec le matériau de l'exemple comparatif 1. La mesure a été effectuée par ATG sur un appareil Perkin Elmer de type TGA7, en effectuant un balayage de températures de 25°C à 500°C suivant une rampe de 10°C/min.

**Tableau 4**

| | 1 | 2a | 2b |
|---|---|---|---|
| % perte (1h à 250°C) | 3,2 | 3,3 | 4,2 |
| T(°C) à 1% de perte | 288 | 283 | 287 |

Ces résultats confirment que l'addition de polyol n'affecte pas la stabilité thermique des matériaux vitrimères.

## Revendications

1. Composition comprenant :
- une résine thermodurcissable de type époxy et un durcisseur choisi parmi les anhydrides d'acide carboxylique comportant au moins une fonction -C(O)-O-C(O)- et les acides comportant au moins deux fonctions acides carboxyliques -C(O)OH,
- au moins un polyol, et
- au moins un catalyseur d'effet vitrimère ;
**caractérisée en ce que** le polyol est un composé renfermant au moins deux fonctions hydroxyle choisi parmi le 1,3-propylène glycol, le 1,3-butanediol, le 1,4-butanediol, le 2,5-hexanediol, le 1,6-hexanediol, le butadiène diol, l'éthylène glycol, le 1,2-propylène glycol, le néopentylglycol ; les polyéthylène glycols (PEG), les polypropylène glycols (PPG) ; le glycérol, le triméthyloléthane, le triméthylolpropane (TMP), le triméthylolbutane, le 1,2,6-hexanetriol ; l'érythritol, le pentaérythritol ; et leurs mélanges
et **en ce que** le catalyseur d'effet vitrimère est choisi parmi :
- les pyridines ;
- les phosphazènes ;
- les composés de type guanidine ;
- les sels ou complexes métalliques organiques ou inorganiques ou les composés organo-métalliques, de métaux choisis parmi les terres rares, les métaux alcalins et les métaux alcalino-terreux, et notamment les composés de Al, Sc, Ti, Mg, Mn, Fe, Co, Ni, Cu, Zn, Zr, Sn, Hf, Pb, Bi, Sb, In, Li, Na, K ;
- et leurs mélanges.

2. Composition selon la revendication 1, **caractérisée en ce que** le polyol est le glycérol, le triméthylolpropane ou le pentaérythritol.

3. Composition selon la revendication 1 ou 2 **caractérisée en ce que** le polyol représente de 0,5% à 40% et de préférence de 2% à 25 % en moles de fonctions hydroxy, par rapport au nombre de moles de fonctions époxyde de la résine thermodurcissable.

4. Composition selon l'une quelconque des revendications précédentes, **caractérisée en ce que** le catalyseur est choisi parmi :
- la 4-pyrrolidinopyridine et la diméthylaminopyridine ;
- les composés de type guanidine de formule (I) : 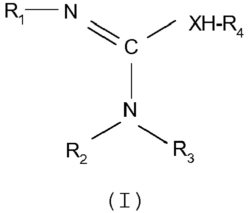 dans laquelle :
X désigne un atome d'azote ou un groupe -CH-,
R₁ désigne un atome d'hydrogène, un groupe alkyle en C₁-C₆ ou un groupe phényle pouvant être substitués par un groupe alkyle en C₁-C₄,
R₂, R₃ et R₄ désignent indépendamment un atome d'hydrogène, un groupe alkyle en C₁-C₆, ou un groupe phényle pouvant être substitués par un groupe alkyle en C₁-C₄, ou un groupe acétyle,
ou R₁ et R₂ forment ensemble et avec les atomes auxquels ils sont liés un hétérocycle saturé ou insaturé et/ou R₃ et R₄ forment ensemble et avec les atomes auxquels ils sont liés un hétérocycle saturé ou insaturé ;
- les phosphates, carbonates, oxydes, hydroxydes, sulfures, carboxylates, alcoolates, acétylacétonates ou dikétiminatesmétalliques ou les composés organo-métalliques, de métaux choisis parmi Ti, Zn, Zr et Bi, de préférence l'acétylacétonate de zinc ou les alcoolates de titane ;
- et leurs mélanges.

5. Composition selon l'une quelconque des revendications précédentes, **caractérisée en ce que** le catalyseur est choisi parmi les composés triazobicyclodécène (TBD), diazabicycloundécène (DBU), diazabicyclononène (DBN), diorthotoluidineguanidine (DOTG) ou 1,3- diphénylguanidine (DPG).

6. Composition selon l'une quelconque des revendications 1 à 4, **caractérisée en ce que** le catalyseur est choisi parmi le propoxyde de titane, l'isopropoxyde de titane, le butoxyde de titane et les composés résultant de la réaction de ces alcoolates avec des glycols, tel que le bis(3-phenoxy-1,2-propandioxyde) de titane.

7. Composition selon l'une quelconque des revendications précédentes, **caractérisé en ce que** le catalyseur représente de 0,1 à 50% en mol, de préférence de 0,1 à 15% en mol, plus préférentiellement de 0,5 à 10% en mol, relativement à la quantité molaire de fonctions époxy contenues dans ladite résine thermodurcissable.

8. Composition selon l'une quelconque des revendications précédentes, **caractérisée en ce que** la résine thermodurcissable est un diglycidyl éther de bisphénol A (DGEBA).

9. Composition selon l'une quelconque des revendications précédentes, **caractérisée en ce que** le durcisseur est choisi parmi les anhydrides d'acide carboxylique.

10. Composition selon l'une quelconque des revendications précédentes, **caractérisée en ce que** la teneur en résine thermodurcissable et en durcisseur va de 10% à 90 % en poids, notamment de 20 % à 80 % en poids voire de 30 à 70 % en poids, relativement au poids total de la composition, le complément à 100 % étant apporté par le catalyseur, le polyol et éventuellement par des composés additionnels choisis parmi : des polymères, des pigments, des colorants, des charges, des plastifiants, des fibres longues ou courtes, tissées ou non, des agents retardateurs de flamme, des agents antioxydants, des lubrifiants, du bois, du verre, des métaux et leurs mélanges.

11. Utilisation de la composition selon l'une quelconque des revendications 1 à 10 pour la fabrication d'un objet en résine thermodurcie déformable à chaud.

12. Objet comprenant une résine thermodurcie obtenue à partir d'une composition telle que définie dans l'une quelconque des revendications 1 à 10.

13. Procédé de déformation d'un objet, tel qu'un procédé d'assemblage, de soudage, de réparation ou de recyclage, comprenant l'application à un objet conforme à la revendication 12 d'une contrainte mécanique à une température (T) supérieure à la température de transition vitreuse Tg de la résine thermodurcie.

14. Utilisation d'un ou plusieurs objets conformes à la revendication 12 dans les domaines de l'automobile, l'aéronautique, le nautisme, l'aérospatiale, le sport, le bâtiment, l'électrique, l'isolation électrique, l'électronique, l'éolien, l'emballage ou l'imprimerie.

## Patentansprüche

1. Zusammensetzung, umfassend:
- ein warmhärtbares Harz vom Epoxid-Typ und einen Härter, der aus Carbonsäureanhydriden mit mindestens einer -C(O)-O-C(O)-Funktion und Säuren mit mindestens zwei Carbonsäurefunktionen -C(O)OH, vorzugsweise Carbonsäureanhydriden, ausgewählt ist,
- mindestens ein Polyol und
- mindestens einen Katalysator mit Vitrimer-Effekt;
**dadurch gekennzeichnet, dass** das Polyol eine Verbindung mit mindestens zwei Hydroxylfunktionen ist, die aus 1,3-Propylenglykol, 1,3-Butandiol, 1,4-Butandiol, 2,5-Hexandiol, 1,6-Hexandiol, Butadiendiol, Ethylenglykol, 1,2-Propylenglykol, Neopentylglykol; Polyethylenglykolen (PEG), Polypropylenglykolen (PPG); Glycerin, Trimethylolethan, Trimethylolpropan (TMP), Trimethylolbutan, 1,2,6-Hexantriol; Erythritol, Pentaerythritol und Mischungen davon ausgewählt ist
und dass der Katalysator mit Vitrimer-Effekt aus:
- Pyridinen;
- Phosphazenen;
- Verbindungen vom Guanidin-Typ;
- organischen oder anorganischen Metallsalzen oder -komplexen oder Organometallverbindungen von Metallen, die aus Seltenen Erden, Alkalimetallen und Erdalkalimetallen ausgewählt sind, und insbesondere Verbindungen von Al, Sc, Ti, Mg, Mn, Fe, Co, Ni, Cu, Zn, Zr, Sn, Hf, Pb, Bi, Sb, In, Li, Na, K;
- und Mischungen davon
ausgewählt ist.

2. Zusammensetzung nach Anspruch 1, **dadurch gekennzeichnet, dass** es sich bei dem Polyol um Glycerin, Trimethylolpropan oder Pentaerythritol handelt.

3. Zusammensetzung nach Anspruch 1 oder 2, **dadurch gekennzeichnet, dass** das Polyol 0,5 bis 40 Mol-% und vorzugsweise 2 bis 25 Mol-% Hydroxyfunktionen, bezogen auf die Zahl der Mole von Epoxidfunktionen des warmhärtbaren Harzes, repräsentiert.

4. Zusammensetzung nach einem der vorhergehenden Ansprüche, **dadurch gekennzeichnet, dass** der Katalysator aus:
- 4-Pyrrolidinopyridin und Dimethylaminopyridin;
- Verbindungen vom Guanidin-Typ der Formel (I): 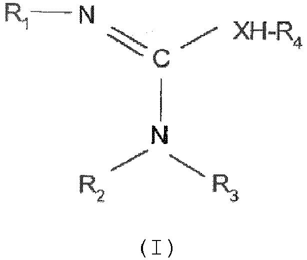 in der:
X für ein Stickstoffatom oder eine -CH-Gruppe steht,
R₁ für ein Wasserstoffatom oder eine C₁-C₆-Alkylgruppe oder eine Phenylgruppe, die durch eine C₁-C₄-Alkylgruppe substituiert sein können, steht, R₂, R₃ und R₄ unabhängig für ein Wasserstoffatom oder eine C₁-C₆-Alkylgruppe oder eine Phenylgruppe, die durch eine C₁-C₄-Alkylgruppe substituiert sein können, oder eine Acetylgruppe stehen,
oder R₁ und R₂ zusammen und mit den Atomen, an die sie gebunden sind, einen Heterocyclus gesättigten oder ungesättigten bilden und/oder R₃ und R₄ zusammen und mit den Atomen, an die sie gebunden sind, einen gesättigten oder ungesättigten Heterocyclus bilden;
- Metallphosphaten, -carbonaten, -oxiden, -hydroxiden, -sulfiden, -carboxylaten, -alkoxiden, -acetylacetonaten oder -diketiminaten oder Organometallverbindungen von Metallen, die aus Ti, Zn, Zr und Bi ausgewählt sind, vorzugsweise Zinkacetylacetonat oder Titanalkoxiden;
- und Mischungen davon
ausgewählt ist.

5. Zusammensetzung nach einem der vorhergehenden Ansprüche, **dadurch gekennzeichnet, dass** der Katalysator aus den Verbindungen Triazobicyclodecen (TBD), Diazabicycloundecen (DBU), Diazabicyclononen (DBN), Diorthotolylguanidin (DOTG) oder 1,3-Diphenylguanidin (DPG) ausgewählt ist.

6. Zusammensetzung nach einem der Ansprüche 1 bis 4, **dadurch gekennzeichnet, dass** der Katalysator aus Titanpropoxid, Titanisopropoxid, Titanbutoxid und Verbindungen, die sich aus der Reaktion dieser Alkoholate mit Glykolen ergeben, wie Titanbis(3-phenoxy-1,2-propandioxid), ausgewählt ist.

7. Zusammensetzung nach einem der vorhergehenden Ansprüche, **dadurch gekennzeichnet, dass** der Katalysator 0,1 bis 50 Mol-%, vorzugsweise 0,1 bis 15 Mol-%, weiter bevorzugt 0,5 bis 10 Mol-%, bezogen auf die molare Menge von Epoxidfunktionen, die in dem warmhärtbaren Harz enthalten sind, repräsentiert.

8. Zusammensetzung nach einem der vorhergehenden Ansprüche, **dadurch gekennzeichnet, dass** es sich bei dem warmhärtbaren Harz um einen Bisphenol-A-diglycidylether (BADGE) handelt.

9. Zusammensetzung nach einem der vorhergehenden Ansprüche, **dadurch gekennzeichnet, dass** der Härter aus Carbonsäureanhydriden ausgewählt ist.

10. Zusammensetzung nach einem der vorhergehenden Ansprüche, **dadurch gekennzeichnet, dass** der Gehalt an warmhärtbarem Harz und an Härter im Bereich von 10 bis 90 Gew.-%, insbesondere 20 bis 80 Gew.-% oder sogar 30 bis 70 Gew.-%, bezogen auf das Gesamtgewicht der Zusammensetzung, beträgt, wobei der Rest auf 100 % durch den Katalysator, das Polyol und gegebenenfalls durch zusätzliche Verbindungen, die aus Polymeren, Pigmenten, Farbstoffen, Füllstoffen, Weichmachern, langen oder kurzen Web- oder Vliesstofffasern, Flammschutzmitteln, Antioxidantien, Schmiermitteln, Holz, Glas, Metallen und Mischungen davon ausgewählt sind, beigesteuert wird.

11. Verwendung der Zusammensetzung nach einem der Ansprüche 1 bis 10 zur Herstellung eines Gegenstands aus einem duroplastischen Harz, das in der Wärme verformbar ist.

12. Gegenstand, umfassend ein duroplastisches Harz, erhalten aus einer Zusammensetzung gemäß einem der Ansprüche 1 bis 10.

13. Verfahren zum Verformen eines Gegenstands, wie ein Montage-, Schweiß-, Reparatur- oder Recyclingverfahren, umfassend das Anwenden einer mechanischen Belastung auf einen Gegenstand gemäß Anspruch 12 bei der Temperatur (T) oberhalb der Glasübergangstemperatur Tg des duroplastischen Harzes.

14. Verwendung eines oder mehrerer Gegenstände gemäß Anspruch 12 im Auto-, Luftfahrt-, Marine-, Raumfahrt-, Sport-, Bau-, Elektro-, Elektroisolations-, Elektronik-, Windkraft-, Verpackungs- oder Drucksektor.

## Claims

1. Composition comprising:
- a thermosetting resin of epoxy type and a curing agent chosen from carboxylic acid anhydrides comprising at least one -C(O)-O-C(O)- function and acids comprising at least two carboxylic acid functions -C(O)OH,
- at least one polyol, and
- at least one vitrimer effect catalyst;
**characterized in that** the polyol is a compound containing at least two hydroxyl functions, chosen from 1,3-propylene glycol, 1,3-butanediol, 1,4-butanediol, 2,5-hexanediol, 1,6-hexanediol, butadiene diol, ethylene glycol, 1,2-propylene glycol, neopentylglycol; polyethylene glycols (PEGs), polypropylene glycols (PPGs); glycerol, trimethylolethane, trimethylolpropane (TMP), trimethylolbutane, 1,2,6-hexanetriol; erythritol, pentaerythritol; and mixtures thereof;
and **in that** the vitrimer effect catalyst is chosen from:
- pyridines;
- phosphazenes;
- compounds of guanidine type;
- organic or inorganic metal salts or complexes or organometallic compounds, of metals chosen from: rare earth metals, alkali metals and alkaline earth metals, and in particular compounds of Al, Sc, Ti, Mg, Mn, Fe, Co, Ni, Cu, Zn, Zr, Sn, Hf, Pb, Bi, Sb, In, Li, Na, K;
- and mixtures thereof.

2. Composition according to Claim 1, **characterized in that** the polyol is chosen from glycerol, trimethylolpropane or pentaerythritol.

3. Composition according to Claim 1 or 2, **characterized in that** the polyol represents from 0.5 mol% to 40 mol% and preferably from 2 mol% to 25 mol% of hydroxyl functions, relative to the number of moles of epoxide functions of the thermosetting resin.

4. Composition according to any one of the preceding claims, **characterized in that** the catalyst is chosen from:
- 4-pyrrolidinopyridine and dimethylaminopyridine;
- compounds of guanidine type of formula (I): 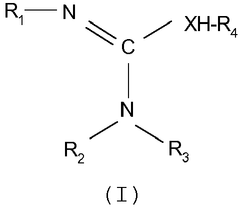 in which:
X denotes a nitrogen atom or a -CH- group,
R₁ denotes a hydrogen atom or a C₁-C₆ alkyl group or a phenyl group that can be substituted with a C₁-C₄ alkyl group,
R₂, R₃ and R₄ independently denote a hydrogen atom, a C₁-C₆ alkyl group, or a phenyl group that can be substituted with a C₁-C₄ alkyl group, or an acetyl group,
or R₁ and R₂ form, together and with the atoms to which they are bonded, a heterocycle saturated or unsaturated and/or R₃ and R₄ form, together and with the atoms to which they are bonded, a saturated or unsaturated heterocycle;
- metal phosphates, carbonates, oxides, hydroxides, sulfides, carboxylates, alkoxides, acetylacetonates or diketiminates or organometallic compounds, of metals chosen from Ti, Zn, Zr and Bi, preferably zinc acetylacetonate or titanium alkoxides;
- and mixtures thereof.

5. Composition according to any one of the preceding claims, **characterized in that** the catalyst is chosen from the compounds triazobicyclodecene (TBD), diazabicycloundecene (DBU), diazabicyclononene (DBN), diorthotolylguanidine (DOTG) or 1,3- diphenylguanidine (DPG).

6. Composition according to any one of Claims 1 to 4, **characterized in that** the catalyst is chosen from titanium propoxide, titanium isopropoxide, titanium butoxide and compounds resulting from the reaction of these alkoxides with glycols, such as titanium bis(3-phenoxy-1,2-propane dioxide).

7. Composition according to any one of the preceding claims, **characterized in that** the catalyst represents from 0.1 to 50 mol%, preferably from 0.1 to 15 mol%, more preferentially from 0.5 to 10 mol%, relative to the molar amount of epoxy functions contained in said thermosetting resin.

8. Composition according to any one of the preceding claims, **characterized in that** the thermosetting resin is bisphenol A diglycidyl ether (DGEBA).

9. Composition according to any one of the preceding claims, **characterized in that** the curing agent is chosen from carboxylic acid anhydrides.

10. Composition according to any one of the preceding claims, **characterized in that** the content of thermosetting resin and of curing agent ranges from 10% to 90% by weight, in particular from 20% to 80% by weight or even from 30% to 70% by weight, relative to the total weight of the composition, the remainder to 100% being provided by the catalyst, the polyol and optionally by additional compounds chosen from: polymers, pigments, dyes, fillers, plasticizers, long or short, woven or nonwoven fibers, flame retardants, antioxidants, lubricants, wood, glass, metals, and mixtures thereof.

11. Use of the composition according to any one of Claims 1 to 10, for producing an object made of thermoset resin that is hot-deformable.

12. Object comprising a thermoset resin obtained from a composition as defined in any one of Claims 1 to 10.

13. Process for deforming an object, such as an assembly, welding, repairing or recycling process, comprising the application, to an object in accordance with Claim 12, of a mechanical stress at a temperature (T) above the glass transition temperature Tg of the thermoset resin.

14. Use of one or more objects in accordance with Claim 12 in the motor vehicle, aeronautical, nautical, aerospace, sport, construction, electrical, electrical insulation, electronics, wind power, packaging or printing fields.
